Europäisches Patentamt

European Patent Office

Office européen des brevets

(19)

(11) Publication number: **0 156 116**
**A2**

(12) # EUROPEAN PATENT APPLICATION

(21) Application number: **85100893.8**

(22) Date of filing: **29.01.85**

(51) Int. Cl.⁴: **G 09 G 1/00**

(30) Priority: **30.03.84 US 595161**

(43) Date of publication of application:
**02.10.85 Bulletin 85/40**

(84) Designated Contracting States:
**DE FR GB IT**

(71) Applicant: **International Business Machines Corporation**
**Old Orchard Road**
**Armonk, N.Y. 10504(US)**

(72) Inventor: **Berry, Richard Edmond**
**4209 Val Verde Dr.**
**Georgetown Texas 78626(US)**

(72) Inventor: **Ruiz, Thomas Michael**
**7407 Attar Cove**
**Austin Texas 78759(US)**

(74) Representative: **Combeau, Jacques**
**Compagnie IBM France Département de Propriété**
**Industrielle**
**F-06610 La Gaude(FR)**

(54) Method of, and system for, varying adjacent view port sizes on a display screen.

(57) A method of, and system for, managing split screen view ports such that a view into a document can be varied up to an established view area size. A view area is determined and then a divider is called for dividing the view area. Calling of the divider defines a split screen mode for permitting portions of different documents to be viewed adjacent one another. If a larger view of one of the portions is desired, the divider is dynamically and interactively moveable up to view area boundaries.

EP 0 156 116 A2

./...

Croydon Printing Company Ltd

FIG. 3

# METHOD OF, AND SYSTEM FOR, VARYING ADJACENT VIEW PORT SIZES ON A DISPLAY SCREEN

## Technical Field

This invention relates generally to comparison viewing on display screens and more specifically to a method of, and system for, dynamically varying sizes of adjacent view ports within a view area.

## Background Art

Split screen facilities or application programs for keyboard/display standalone and host computer connected terminal work stations have been available for several years. In using these facilities, one can, for example, create two view ports and cause a portion of one document to be displayed on the top half of a display screen and a portion of another document to be displayed on the bottom half of the screen. Side by side viewing is also possible. In addition, capabilities have been provided to further divide the screen. Commonly, on the first division the screen is divided into halves, on the second division the screen is divided into fourths, etc.

Split screen applications generally satisfy an operator's wants or needs of being able to compare one document with another. However, increasing the size of a view port can, for practical purposes, only be accomplished by reducing the number of view ports. That is, if an operator wishes to view a larger portion of one of the documents, full screen operation will provide the largest portion. Using a split screen, a division by 2 is the next best alternative.

In recent times, windowing systems or applications have become popular. Portions of different documents can be reviewed and compared, but separate windows must be created. Dealing separately with separate windows requires more operator time, effort, and attention, but in dealing with one

0156116

window at a time, flexibility in terms of managing view port size is improved. That is, to meet as many operator wants or needs as possible, users have increased the applications' capability to the extent that windows can be increased or decreased in size. This can be for purposes of either magnification or increasing the size of the portion of the document being viewed.

Whether using a split screen or windowing application, absent has been the ability to readily change the size of one view port relative to another within a view area. As alluded to above, the most common alternatives are creating separate windows and operating on one at a time, and/or excessive keying. When separate windows are created, one can be partially overlayed with another. Also, one can be increased in size whether overlayed or not. An important point to note here is that in overlaying alone, the size of one window is decreased, but the size of the other is not increased. This is because separate windows must be dealt with, and in dealing with separate windows, separate operations are required. This in turn has required excessive keying and operator attention.

From the above, clear deficiencies exist in the prior art. More specifically, the instant invention presents an advance over prior art systems, applications, and techniques in that an operator can readily set up adjacent view ports within a view area for comparison viewing of different documents, and then dynamically increase the size of one of the view ports to obtain a view of a larger portion of one of the documents. In setting up the adjacent view ports, a view area is defined, and a divider is called. The divider can then be interactively and dynamically moved for opening up one of the view ports. The advantages of this advance are improved flexibility and useability.

## Disclosure of the invention

A unique method of, and system for, varying adjacent view port sizes is provided in order to readily obtain a larger view of one of a plurality of documents being displayed on a screen. Whether operation is within a window or on a full screen, view ports are first set up by calling a divider. The divider creates two view ports and is interactively and dynamically moveable. Displayable within the view ports are different portions of different documents. If viewing of a larger portion of one of the documents is desired, the divider is moved to increase the size of the applicable view port.

## Brief Description of the Drawing

Fig. 1 is a pictorial representation of a full screen or window following creation of two view ports upon calling a horizontal divider.

Fig. 2 is a pictorial representation of a full screen or window following creation of two view ports upon calling a vertical divider.

Fig. 3 is a flow diagram generally illustrating the operations of creating and managing adjacent view ports.

## Detailed Description of a Preferred Embodiment

As a preferred embodiment, the instant invention will be packaged as, or included in, an application program. For purposes of conciseness, application program will be abbreviated to application hereinafter. The application will have been written by a user or programmer for use in either a word processing or a computing system operable by an operator. The systems contemplated include standalone and host connected terminal keyboard/display work stations. The system display will preferably be of an all-points-addressable (APA) cathode ray tube (CRT) type.

0156116

The face of the display will be referred to as a screen. When a full screen mode is called for, the entire screen will be used and be the view area. When a windowing mode is called for, the view area can occupy anywhere from only a portion of the screen, up to the entire screen. When operation is in a windowing mode, a default bordered window occupying a portion of the screen will be presented to the operator. The window can thereafter be moved, and either enlarged or diminished in size. Window manipulation in terms of locating and sizing on the screen, as a broad concept, is well known and forms no part of the instant invention. It is to be pointed out though, that if operation is to be in a windowing mode, a window must first be defined by either the operator or the system.

Again, when operation is in a windowing mode, a view area will be created and will be the size of the window. As a practical matter, the window can be varied in size from very small up to a point that it fills the entire screen. When operation is in a full screen mode, the view area will be the entire screen. The reason for separate full screen and windowing modes is that default window sizes and locations can be established to eliminate a number of operator actions.

Upon division or splitting of the screen or a window, operation is in a split screen mode. The portions formed upon division or splitting are referred to as view ports. View ports are ports providing views into different portions of a document or documents. For example, while operating in a split screen mode with respect to either a full screen or a window, a portion of one document can be displayed or viewed adjacent and above a portion of another document. This provides an operator with the ability to compare portions of different documents. The term document is meant to include stored and retrievable information. The information can be in the form of text, graphics, tables, etc.

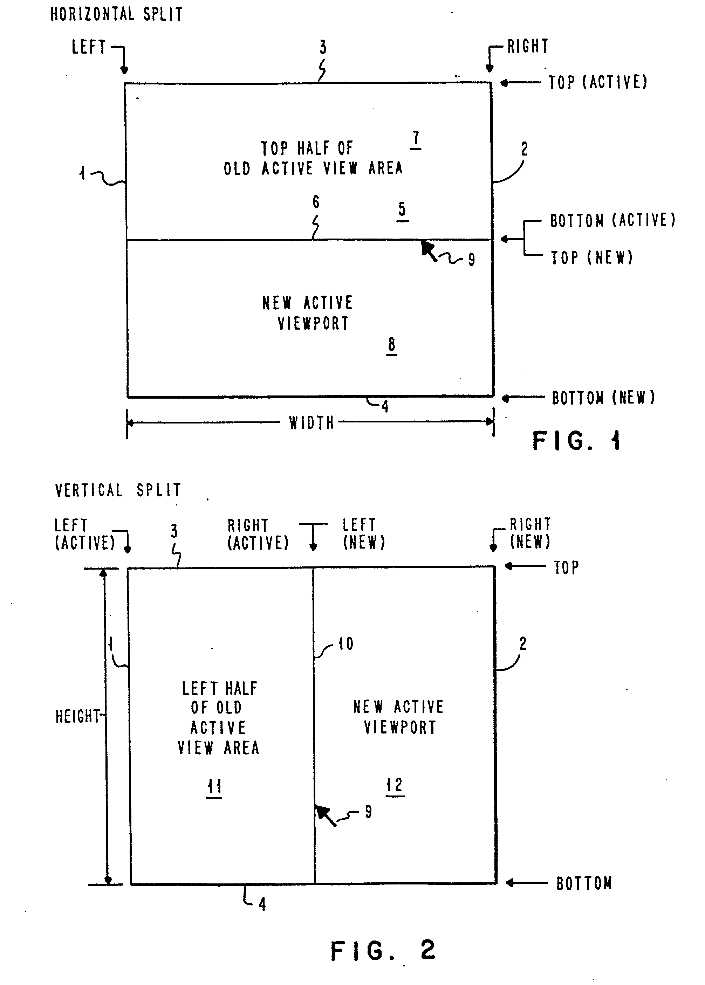

For a more detailed understanding of the invention, it is to be assumed that use is of a standalone keyboard/display

0156116

computing system such as an IBM Personal Computer configured with a keyboard, an APA display, a black and white monitor, a graphics adaptor, a disk drive, an operating system, a mouse, sufficient working memory, and diskettes containing documents and an application containing the instant invention. Further assume the system has been powered on, etc., and that the application of this invention has been loaded and is running. Also, assume that application defaults are for a full screen mode, and a horizontal full width divider. By an operator calling the divider, a split screen mode is defined with top and bottom view ports. This is illustrated in Fig. 1 wherein sides 1 and 2, top 3 and bottom 4 define screen 5 with divider 6 evenly dividing the screen into view ports 7 and 8.

When operation is in a defaulted full screen mode, an operator can avoid the tasks of defining, locating and sizing of a window. If however, a windowing mode is desired, a default window can be called, and then made of any useful size from very small up to full screen.

The next operator task is to define the portion of one document to be presented in view port 7 and the portion of another document to be presented in view port 8. As was pointed out earlier, presentation could be of different portions of the same document. In defining the portions to be presented, the operator will specify the top or first line of each portion to be presented. The specified top or first line of one portion will be presented adjacent top 3 and in view port 7, and the specified top or first line of the other portion will be presented adjacent divider 6 in view port 8.

With the divider having been called and in place, the operator can fetch a pointing cursor 9, select the divider and then dynamically move the divider under mouse control. The reason the divider is moved under mouse control is that the cursor is controlled by the mouse. While mention has been made of mouse control, control could well be with a joy stick, scratch pad, track ball, etc.

Assume that the divider is moved down. View port 7 will be enlarged and the portion of the document below divider 6 and potentially viewable through view ort 7 will be presented to the extent of movement of the divider. At the same time, view port 8 will be diminished in size and the portion of the document at the top of view port 8 will be covered up with the portion added to view port 7. As such, the cursor serves as a pull string for pulling additional information over existing information.

Refer next to Fig.2. This figure is similar to Fig. 1 with the exception of the fact that a vertical full height divider 10 has been specified. Created are view ports 11 and 12 for side by side viewing of information comprised of, for example, a table. In this case, the divider can be moved to the right for viewing additional columns of information in view port 11.

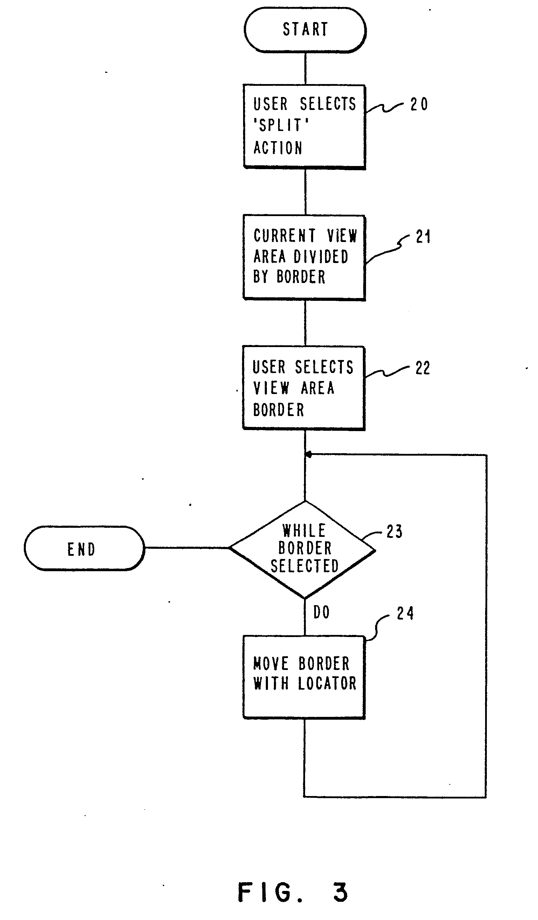

Reference is next made to the flow chart of Fig. 3 which illustrates operator and system operations for causing adjacent view port sizes to be varied.

To begin with, an operator requests a split window or screen as indicated by block 20, and obtains a default horizontal divider. This request can be by keying in a command, pressing a program function key, using a mouse and pointer to select an icon, etc. If a vertical divider is desired rather than a default horizontal divider, an operator request for same must be made.

The view area with which the operator is currently interacting is split into two equal halves by the divider 6 as shown in Fig. 1. This is indicated by block 21.

The operator then positions a pointer (cursor 9) on the display screen, via a locator device such as a mouse, coincident with divider 6. Thereafter, the operator presses a button or switch on the mouse to select the divider 6 as indicated by block 22.

0156116

The operator continues to hold the button pressed down and moves the locator device as indicated by block 23. As the locator device is moved, the pointer and divider move correspondingly as indicated by block 24. As divider 6 is moved upwardly, the lower view port appears to cover the upper one. If the lower view port contains data, the user is able to view a greater quantity in the lower view port. As follows though, less data is viewable in the upper view port. If the lower view port is empty, movement of divider upwardly appears to erase the data in the upper view port. The reverse is also the case for downward movement of the divider.

Movement of divider 6 can continue until the operator releases the button. Upon release, the divider ceases to follow the pointer/locator movement.

Set out below is an illustration of a routine or application useable by the workstation for causing sizes of adjacent view ports to be varied based on operator input and actions. This routine is in program design language from which source and object code are derivable.

```
ON POINTER SELECTION
  CASE OF ACTION
    CASE: 'HORIZONTAL SPLIT'
      TOP(NEW)=(TOP(ACTIVE)-BOTTOM(ACTIVE))/2
      BOTTOM(NEW)=BOTTOM(ACTIVE)
      WIDTH(NEW)=WIDTH(ACTIVE)
      CALL DRAW_BOUNDARY
      NUMPANES=NUMPANES+1
      CALL ACTIVE (NEW)
    CASE: 'VERTICAL SPLIT'
      LEFT(NEW)=((RIGHT(ACTIVE)-LEFT(ACTIVE))/2
      RIGHT(NEW)=RIGHT(ACTIVE)
      HEIGHT(NEW)=HEIGHT(ACTIVE)
      CALL DRAW_BOUNDARY
      NUMPANES=NUMPANES+1
      CALL ACTIVE (NEW)
```

```
CASE: 'BORDER SELECTED'
  WHILE BORDER SELECTED
    CASE OF BOUNDARY_DIRECTION
      CASE: 'HORIZONTAL'
        CASE OF MOUSE_DIRECTION
          CASE: 'UP'
            CALL ERASE_BOUNDARY
            TOP(ACTIVE)=TOP(ACTIVE)+INCR
            CALL DRAW_BOUNDARY
          CASE: 'DOWN'
            CALL ERASE_BOUNDARY
            TOP(ACTIVE)=TOP(ACTIVE)-INCR
            CALL DRAW_BOUNDARY
        ENDCASE
      CASE: 'VERTICAL'
        CASE OF MOUSE_DIRECTION
          CASE: 'LEFT'
            CALL ERASE_BOUNDARY
            LEFT(ACTIVE)=LEFT(ACTIVE)-INCR
            . CALL DRAW_BOUNDARY
          CASE: 'RIGHT'
            CALL ERASE_BOUNDARY
            LEFT(ACTIVE)=LEFT(ACTIVE)+INCR
            CALL DRAW_BOUNDARY
        ENDCASE
    ENDCASE
  ENDWHILE
ENDCASE
```

When the mouse button is pressed, a determination is made as to whether the operator is selecting an icon in order to create a divider (CASE: 'HORIZONTAL SPLIT' and CASE: 'VERTICAL SPLIT'), or is selecting an already existing divider (CASE: 'BORDER SELECTED').

For a horizontal split request, the top of the new view port is determined to be located at a point half of the distance between the top and bottom of the current view area. The

0156116

bottom of the new view port is equal to the bottom of the current view area. The width of the new view port is set equal to that of the current view area. Such information as top and bottom view port locations, as well as view port width, might typically be stored in an array containing such elements for each existing view port. A divider is then drawn (CALL DRAW-BOUNDARY), the number of existing view ports is incremented, and the new view port is made the active view port in order to enable operator input (CALL ACTIVE).

Vertical splitting follows a similar procedure except with a left/right orientation instead of top/bottom.

When the operator selects the divider (CASE: 'BORDER SELECTED'), separate routines are used depending on whether the divider is horizontal or vertical (CASE: 'HORIZONTAL' and CASE: 'VERTICAL').

For a horizontal divider , only the up/down component of locator movement is used (CASE: 'UP' and CASE: 'DOWN'). In either case, the current divider is first erased (CALL ERASE-BOUNDARY), the new top view port boundary location is determined, and the divider line is redrawn (CALL DRAW-BOUNDARY).

Vertical divider movement follows a similar procedure except with a left/right orientation instead of top/bottom.

In each case, such action continues while the button is held pressed and ceases when it is released.

In summary, a unique method of, and system for, varying adjacent view port sizes is provided in order to readily obtain a larger view of one of a plurality of documents being displayed on a screen. Whether operation is within a window or on a full screen, view ports are first set up by calling a divider. The divider creates two view ports and is interactively and dynamically moveable. Displayable within the view ports are different portions of different documents.

0156116

If viewing of a larger portion of one of the documents is desired, the divider is moved to increase the size of the applicable view port.

While the invention has been particularly shown and described with reference to a preferred embodiment, it will be understood by those skilled in the art that various changes in form and detail may be made without departing from the spirit and scope of the invention.

**0156116**

## Claims

1. A method of varying a view through a display view port without varying a view area, characterized in that it comprisee ::

   a) selecting a divider for dividing said view area into view ports; and

   b) dynamically moving said divider a desired extent for causing an increase in size of one of said view ports.

2. A method according to Claim 1 wherein said the step of selecting said divider includes establishing a divider across said view area.

3. A method according to Claim 1 including defining said view area.

4. A method according to Claim 1 including defining a split screen mode upon said selecting said divider.

5. A method according to Claim 1 including selecting said divider by a cursor under device control.

6. A method according to Claim 1 including moving said divider by moving a cursor under device control.

7. A system for varying a view through a display view port, said system comprising:

   a) means for selecting a divider for dividing a view area into view ports; and

   b) means for moving said divider a desired extent for causing an increase in size of one of said view ports.

8.   A system according to Claim 7 including means for defining said view area.

9.   A system according to Claim 8 including means for defining a split screen mode for causing said divider to divide said view area.

HORIZONTAL SPLIT

LEFT ⌐ 3 ⌐ RIGHT

TOP (ACTIVE)

TOP HALF OF
OLD ACTIVE VIEW AREA  $\underline{7}$

2

6  $\underline{5}$

BOTTOM (ACTIVE)
TOP (NEW)

9

NEW ACTIVE
VIEWPORT

$\underline{8}$

BOTTOM (NEW)

4

WIDTH

FIG. 1

VERTICAL SPLIT

LEFT (ACTIVE)  3  RIGHT (ACTIVE)  LEFT (NEW)  RIGHT (NEW)

TOP

10

2

LEFT HALF
OF OLD
ACTIVE
VIEW AREA

$\underline{11}$

NEW ACTIVE
VIEWPORT

$\underline{12}$

HEIGHT

9

BOTTOM

4

FIG. 2

0156116

2 / 2

FIG. 3